(19) **Europäisches Patentamt / European Patent Office / Office européen des brevets**

(11) **EP 4 552 941 A1**

(12) **EUROPEAN PATENT APPLICATION**
published in accordance with Art. 153(4) EPC

(43) Date of publication:
14.05.2025 Bulletin 2025/20

(21) Application number: 23851570.4

(22) Date of filing: 21.07.2023

(51) International Patent Classification (IPC):
*B60W 60/00* (2020.01)   *B60W 40/02* (2006.01)
*G05D 1/20* (2024.01)   *G06V 20/58* (2022.01)
*G06V 10/80* (2022.01)   *G06N 3/02* (2006.01)
*H04W 4/46* (2018.01)

(52) Cooperative Patent Classification (CPC):
B60W 40/02; B60W 40/04; B60W 40/06;
B60W 50/00; B60W 60/00; G06F 17/15;
G06N 3/02; G06V 10/80; G06V 20/58; H04L 67/12;
H04W 4/46

(86) International application number:
PCT/CN2023/108592

(87) International publication number:
WO 2024/032348 (15.02.2024 Gazette 2024/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 09.08.2022 CN 202210948710

(71) Applicant: ZTE Corporation
Shenzhen, Guangdong 518057 (CN)

(72) Inventors:
• WANG, Zinan
  Shenzhen, Guangdong 518057 (CN)
• HUANG, He
  Shenzhen, Guangdong 518057 (CN)

(74) Representative: Pennacchio, Salvatore Giovanni
Jacobacci & Partners S.p.A.
Via Senato, 8
20121 Milano (IT)

(54) **AUTOMATIC-DRIVING PERCEPTION METHOD AND SYSTEM, AND CONTROLLER AND COMPUTER-READABLE STORAGE MEDIUM**

(57) An automatic-driving perception method and system, and a controller and a computer-readable storage medium. The method includes: acquiring external environmental information, and generating at least one first environment sensing result according to the environmental information (S110), wherein the environmental information is a road condition where a first vehicle is located; matching the first environment sensing result to obtain a mutual sensing result (S120), wherein the mutual sensing result is obtained by mutual sensing of the first vehicle and a target vehicle; filtering the mutual sensing result to obtain a comprehensive sensing result (S130); and correcting the first environment sensing result according to the comprehensive sensing result (S140).

```
┌─────────────────────────────────────┐
│ Acquire external environmental       │
│ information in real time, and        │── S110
│ generate at least one first          │
│ environment sensing result according │
│ to the environmental information     │
└─────────────────────────────────────┘
                 │
                 ▼
┌─────────────────────────────────────┐
│ Match the first environment sensing  │── S120
│ result to obtain a mutual sensing    │
│ result                               │
└─────────────────────────────────────┘
                 │
                 ▼
┌─────────────────────────────────────┐
│ Filter the mutual sensing result to  │── S130
│ obtain a comprehensive sensing       │
│ result                               │
└─────────────────────────────────────┘
                 │
                 ▼
┌─────────────────────────────────────┐
│ Correct the first environment        │── S140
│ sensing result according to the      │
│ comprehensive sensing result         │
└─────────────────────────────────────┘
```

Fig. 1

EP 4 552 941 A1

**Description**

**Cross-Reference to Related Application**

The present invention is based upon and claims the priority of Chinese Patent Disclosure 202210948710.1 filed on August 09, 2022, the entire contents of which are herein incorporated by reference.

**Technical Field**

Embodiments of the present invention relate to, but are not limited to, the technical field of autonomous driving, and in particular to an automatic-driving perception method and system, a controller and a computer-readable storage medium.

**Background**

In an autonomous driving scenario of a vehicle, a sensing system plays an important role in the normal operation of an autonomous driving system, and with the development of the Internet of Vehicles technology, the collaborative sensing technology is widely applied to a driving process of the vehicle. However, the current automatic-driving perception algorithm mainly focuses on the recognition performance of a single sensor of a single vehicle, but does not make full use the information interaction advantage of the Internet of Vehicles to sense a vehicle environment, thereby reducing the accuracy and reliability of vehicle detection.

**Summary**

The following is an overview of a subject matter described in detail herein. The summary is not intended to limit the protection scope of the claims.
Embodiments of the present invention provide an automatic-driving perception method and system, a controller and a computer-readable storage medium.
In a first aspect, an embodiment of the present invention provides an automatic-driving perception method, performed by a first vehicle, and including: acquiring external environmental information, and generating at least one first environment sensing result according to the environmental information, wherein the environmental information is a road condition where the first vehicle is located; matching the first environment sensing result to obtain a mutual sensing result, wherein the mutual sensing result is obtained by mutual sensing of the first vehicle and a target vehicle; filtering the mutual sensing result to obtain a comprehensive sensing result; and correcting the first environment sensing result according to the comprehensive sensing result.
In a second aspect, an embodiment of the present invention provides an automatic-driving perception method, performed by a data platform, and including: receiving a matching request, a first environment sensing result and first vehicle information, which are sent by a first vehicle; and according to the matching request, the first environment sensing result and the first vehicle information, querying a second environment sensing result matching the first environment sensing result and the first vehicle information, wherein the first environment sensing result is generated by the first vehicle according to external environmental information, the first vehicle information is vehicle information of the first vehicle, and the second environment sensing result is generated by a target vehicle according to the external environmental information.
In a third aspect, an embodiment of the present invention provides an automatic-driving perception system, including: a fusion sensing module, configured to acquire external environmental information in real time, and generate at least one first environment sensing result according to the environmental information, wherein the environmental information is a road condition where a first vehicle is located; a data matching module, in communication connection with a data platform, and configured to match the first environment sensing result via the data platform to obtain a mutual sensing result, wherein the mutual sensing result is obtained by the first vehicle sensing a target vehicle; and a bidirectional filtering module, in communication connection with the data matching module, and configured to filter the mutual sensing result to obtain a comprehensive sensing result, and correct the first environment sensing result according to the comprehensive sensing result.
In a fourth aspect, an embodiment of the present invention provides a controller, including a memory, a processor, and a computer program stored in the memory and capable of running on the processor, wherein the processor, when executing the computer program, implements the automatic-driving perception method in the first aspect.
In a fifth aspect, an embodiment of the present invention provides a computer-readable storage medium, wherein the computer-readable storage medium stores a computer-executable program, and the computer-executable program is configured to cause a computer to execute the automatic-driving perception method in the first aspect, or the automatic-driving perception method in the second aspect.

Additional aspects and advantages of the present invention will be given in part in the following description, become apparent in part from the following description, or be learned from the practice of the present invention.

**Brief Description of the Drawings**

The drawings are used to provide a further understanding of the technical solutions of the present invention, constitute a part of the specification, and are used to explain the technical solutions of the present invention together with the embodiments of the present invention, but do not constitute a limitation on the technical solutions of the present invention.

Fig. 1 is a main flowchart of an automatic-driving perception method provided in one embodiment of the present invention;

Fig. 2 is another sub-flowchart of an automatic-driving perception method provided in one embodiment of the present invention;

Fig. 3 is another sub-flowchart of an automatic-driving perception method provided in one embodiment of the present invention;

Fig. 4 is another sub-flowchart of an automatic-driving perception method provided in one embodiment of the present invention;

Fig. 5 is another sub-flowchart of an automatic-driving perception method provided in one embodiment of the present invention;

Fig. 6 is another sub-flowchart of an automatic-driving perception method provided in one embodiment of the present invention;

Fig. 7 is another sub-flowchart of an automatic-driving perception method provided in one embodiment of the present invention;

Fig. 8 is a main flowchart of an automatic-driving perception method provided in another embodiment of the present invention;

Fig. 9 is another sub-flowchart of an automatic-driving perception method provided in one embodiment of the present invention;

Fig. 10 is a schematic diagram of modules of an automatic-driving perception system provided in one embodiment of the present invention;

Fig. 11 is a schematic diagram of modules of an automatic-driving perception system provided in another embodiment of the present invention; and

Fig. 12 is a schematic structural diagram of a controller provided in one embodiment of the present invention.

**Detailed Description of the Embodiments**

To make the objectives, technical solutions and advantages of the present invention clearer, the present invention will be further described in detail below in combination with the drawings and embodiments. It should be understood that specific embodiments described herein are only used to explain the present invention and are not intended to limit the present invention.

It should be understood that in the description of the embodiments of the present invention, a plurality of (or multiple) meanings two or more; greater than, less than, exceeding and the like are understood as not including the present number; and more than, less than, including and the like are understood as including the present number. In a case that described, "first", "second" and the like are merely intended to distinguish technical features, but cannot be understood as indicating or implying relative importance or implicitly indicating the number of indicated technical features or implicitly indicating a sequence of the indicated technical features.

In an autonomous driving scenario of a vehicle, a sensing system plays an important role in the normal operation of an autonomous driving system, and in an actual scenario, a multi-sensor combination method is often used to improve the sensing precision. With the development of the Internet of Vehicles technology, the multi-vehicle collaborative sensing technology is widely performed by driving processes of vehicles, and the collaborative sensing technology may integrate sensing results of different vehicles, thereby further improving the accuracy and reliability of sensing.

In an embodiment, the multi-sensor combination is to integrate data and information acquired by a plurality of sensors together for comprehensive analysis, so as to describe an external environment more accurately and more reliably, thereby improving the correctness of system decision. Different sensors have different principles and functions and thus may play respective advantages in different usage scenarios, and a plurality of similar or different types of sensors may respectively obtain information of different local parts and categories, and these information may be complementary to each other, or there may be redundancy and contradiction, while a control center may finally only issue a unique correct instruction, which requires that the control center must fuse the information obtained by the plurality of sensors for comprehensive judgement.

The current automatic-driving perception algorithm mainly has two problems: 1, the existing algorithm still focuses on improving the accuracy, but pays less attention to complexity, thus when encountering a complex road condition during driving, it is difficult to burden a high-energy-consumption calculation unit in the current vehicle; and 2, the current algorithm mainly focuses on the recognition performance of a single sensor of a single vehicle, but does not make full use the information interaction advantages of a plurality of sensors and the Internet of Multi-Vehicles to sense a vehicle environment, thereby reducing the accuracy and reliability of vehicle detection.

The present invention provides an automatic-driving perception method, which may perform structured pruning on a trained fusion sensing model and then apply the same to vehicle environment sensing, and meanwhile uses the Internet of Vehicles technology to enable vehicles to mutually sense vehicle shared sensing data, and performs coordinate conversion and filtering on the vehicle shared sensing data to obtain a new comprehensive result, thereby improving the accuracy and reliability of a sensing result.

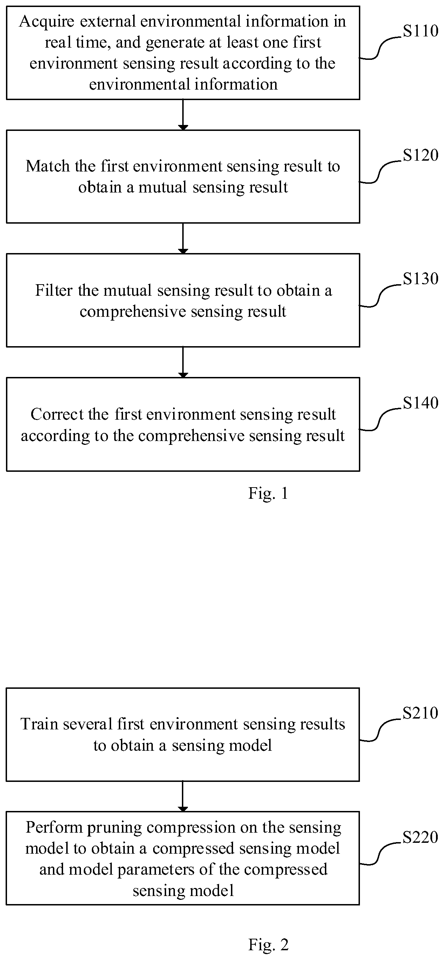

Referring to Fig. 1, in a first aspect, an embodiment of the present invention provides an automatic-driving perception method, performed by a first vehicle, and including, but not limited to, S110, S120, S130, and S140.

At S110, acquiring external environmental information in real time, and generating at least one first environment sensing result according to the environmental information, wherein the environmental information is a road condition where the first vehicle is located.

At S120, matching the first environment sensing result to obtain a mutual sensing result, wherein the mutual sensing result is obtained by mutual sensing of the first vehicle and a target vehicle.

At S130, filtering the mutual sensing result to obtain a comprehensive sensing result.

At S140, correcting the first environment sensing result according to the comprehensive sensing result.

It should be noted that the first vehicle in the present invention may be any vehicle.

It can be understood that, when the first vehicle is in a driving process, the first vehicle may acquire the external environmental information in real time, and generate the first environment sensing result according to the environmental information, the environmental information is a road condition outside the first vehicle. In an embodiment, the environmental information is the road condition where the first vehicle is located, that is, information about a road where the first vehicle is currently located and a vehicle distribution condition in the vicinity of the first vehicle. After the first environment sensing result is obtained, the first environment sensing result is automatically uploaded and stored to a data platform, because the first environment sensing result further includes information such as distances between the first vehicle and all nearby vehicles, features of all nearby vehicles, and the nearby vehicles also upload the environment sensing results thereof to the data platform, so the first environment sensing result may be matched by the data platform to obtain a sensing result of the target vehicle matching the first vehicle, that is, to obtain the mutual sensing result, and the mutual sensing result reflects feature information of the first vehicle and the target vehicle, the distance between the first vehicle and the target vehicle, and the road conditions where the first vehicle and the target vehicle are located; and in order to extract a more accurate mutual sensing result, it is also necessary to filter the mutual sensing result to remove interference factors from the mutual sensing result to obtain the comprehensive sensing result, so as to facilitate subsequent correction of the first environment sensing result.

It should be noted that compared with the mutual sensing result, the comprehensive sensing result is more accurate and reliable; in the present invention, after the comprehensive sensing result is obtained, the first environment sensing result may also be corrected according to the comprehensive sensing result, a state value of the first vehicle is indirectly corrected in fact, the state value refers to the current driving state parameter of the first vehicle, such as the current speed of the first vehicle, a turning angle of the first vehicle, and the like, the estimation and adjustment of the driving state parameter of the first vehicle are performed based on the comprehensive sensing result, and the environment sensing result or state value of the first vehicle is corrected according to the comprehensive sensing result in the present invention, thereby improving the accuracy and reliability of vehicle detection.

In an embodiment, the first vehicle acquires the external environmental information by integrating a plurality of sensors, and the sensors include a visual camera, a laser radar, a millimeter-wave radar, and the like; the visual camera may collect image data, that is, collect and analyze image data of road conditions and vehicle conditions around the first vehicle; the laser radar may emit laser beams to detect the location, a target distance, a speed and other feature vectors of a target, that is, first point cloud data; and the millimeter-wave radar is a radar working at a millimeter wave band for detection, which may recognize a very small target and may simultaneously recognize a plurality of targets to obtain second point cloud data.

It should be noted that in the present invention, there are two storage manners and two matching manners for the first environmental sensing result, one is centralized storage, and the other is distributed storage, wherein the centralized storage may perform centralized processing on sensing information of different vehicles, and a cloud platform is one of specific implementations of the centralized storage; and the distributed storage is to directly store the sensing information on respective vehicles, and may perform matching when data requests are sent between vehicles via the Internet of Vehicles. In an embodiment, in the present invention, the data platform may be the cloud platform, may be a data storage module of the vehicle itself, and may also be an Internet of Vehicles module, which is not specifically limited in the present invention.

Referring to Fig. 2, in the first aspect, an embodiment of the present invention provides an automatic-driving perception method, including, but not limited to, S210 and S220.

At S210, training several first environment sensing results to obtain a sensing model.

At S220, performing pruning compression on the sensing model to obtain a compressed sensing model and model parameters of the compressed sensing model.

It should be noted that before the external environmental information is acquired in real time and the first environment sensing result is generated according to the environmental information, in order to make the mutual sensing result be more accurate, a large number of first environment sensing results need to be trained by a deep learning algorithm to obtain the sensing model, but the sensing model occupies a relatively large space at this time, so that pruning compression needs to be performed on the sensing model to obtain the compressed sensing model and the model parameters of the compressed sensing model, so as to facilitate subsequent preprocessing of the first environment sensing result according to the model parameters.

In an embodiment, the pruning compression is a method for cropping a trained model, which generally searches for an effective evaluation means to judge the importance of the parameters, and crop an unimportant connection or filter to reduce the redundancy of the model.

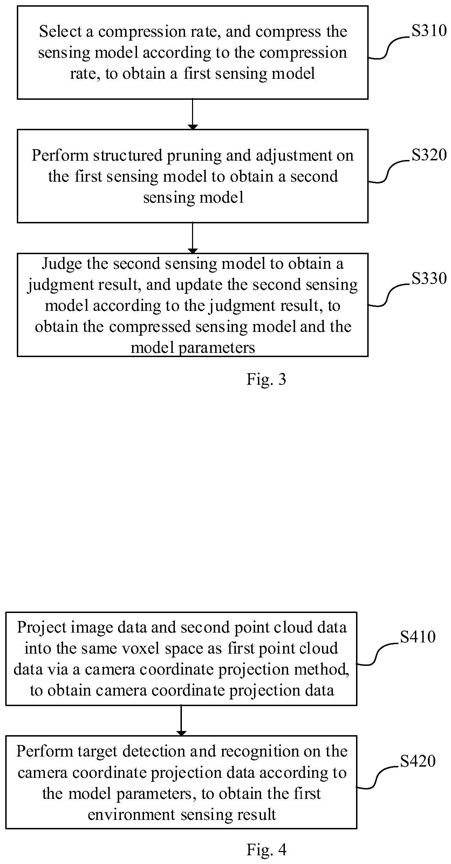

Referring to Fig. 3, in the first aspect, an embodiment of the present invention provides a method for performing the pruning compression on the sensing model to obtain the compressed sensing model and the model parameters of the compressed sensing model, including, but not limited to, S310, S320 and S330.

At S310, selecting a compression rate, and compressing the sensing model according to the compression rate, to obtain a first sensing model.

At S320, performing structured pruning and adjustment on the first sensing model to obtain a second sensing model.

At S330, judging the second sensing model to obtain a judgment result, and updating the second sensing model according to the judgment result, to obtain the compressed sensing model and the model parameters.

It should be noted that, to perform the pruning compression on the sensing model, the compression rate needs to be selected at first, and the sensing model is compressed according to the compression rate to obtain the first sensing model when reaching the compression rate without losing the precision; structured pruning and fine tuning are then performed on the first sensing model to remove redundant parts from the first sensing model, so as to obtain the second sensing model; and then, the second sensing model is judged to obtain the judgment result, and the second sensing model is further updated according to the judgment result to better perfect the second sensing model, so as to obtain the compressed sensing model and the model parameters of the compressed sensing model.

It can be understood that judging the second sensing model to obtain the judgment result, and updating the second sensing model according to the judgment result, to obtain the compressed sensing model and the model parameters includes: in response to the accuracy of the second sensing model being greater than or equal to a preset accuracy threshold value, the second sensing model being the compressed sensing model, and obtaining the model parameters; and in response to the accuracy of the second sensing model being less than the accuracy threshold value, updating the second sensing model until the accuracy of the second sensing model is greater than or equal to the accuracy threshold value.

It should be noted that, in order to confirm whether the calculated second sensing model is accurate enough, it is also necessary to judge the second sensing model, it is judged whether the accuracy of the second sensing model is greater than or equal to the preset accuracy threshold value, in response to the accuracy of the second sensing model being greater than or equal to the accuracy threshold value, the accuracy of the second sensing model reaches the standard, at this time, the second sensing model is the compressed sensing model, and the model parameters are obtained by the compressed sensing model; and in response to the accuracy of the second sensing model being less than the accuracy threshold value, the accuracy of the second sensing model does not reach the standard, at this time, it is necessary to continue to update the second sensing model until the accuracy of the second sensing model is greater than or equal to the accuracy threshold value.

It can be understood that the environmental information includes at least one of image data, first point cloud data and second point cloud data, wherein the image data is captured by the camera, the first point cloud data is detected by the laser radar, and the second point cloud data is detected by the millimeter wave radar.

It should be noted that in the present invention, the environmental information may be acquired in a plurality of aspects and different angles, and the environmental information includes the image data, the first point cloud data and the second point cloud data. **In** an embodiment, in the present invention, sample expansion is performed on the obtained environmental information in a plurality of aspects by collecting the image data, the first point cloud data and the second point cloud data, thereby also improving the accuracy of the obtained first environment sensing result.

According to one embodiment of the present invention, the sensor includes a visual camera, a laser radar, a millimeter wave radar, and the like; the visual camera may capture an external image in real time and collects the image data, that is, collect and analyze the image data of road conditions and vehicle conditions around the first vehicle; the laser radar may emit laser beams to detect the location, a target distance, a speed and other feature vectors of a target, and detects the external environment in real time, that is, the first point cloud data; and the millimeter-wave radar is a radar working at a millimeter wave band for detection, which may recognize a very small target in the external environment and may simultaneously recognize a plurality of targets to obtain the second point cloud data.

It can be understood that generating the at least one first environment sensing result according to the environmental information includes: performing target detection and recognition on the environmental information according to the model parameter, to obtain the first environment sensing result.

It should be noted that after the environmental information is acquired in real time, the environmental information in a plurality of aspects needs to be preprocessed according to the model parameters obtained by pruning compression, to obtain the first environment sensing result, that is, the model parameters are used to perform recognition and target detection processing on the mixed environmental information to output the first environment sensing result, and the first environment sensing result reflects the feature information of the first vehicle, nearby vehicle information, a road condition, an advancing speed, and the like, which is equivalent to a preprocessing process.

Referring to Fig. 4, in the first aspect, an embodiment of the present invention provides a method for performing target detection and recognition on the environmental information according to the model parameters, to obtain the first environment sensing result, including, but not limited to, S410 and S420.

At S410, projecting image data and second point cloud data into the same voxel space as first point cloud data via a camera coordinate projection method, to obtain camera coordinate projection data.

At S420, performing target detection and recognition on the camera coordinate projection data according to the model parameters, to obtain the first environment sensing result.

It should be noted that the image data is acquired by the camera, the first point cloud data is acquired by the laser radar, the second point cloud data is acquired by the millimeter wave radar, since acquisition apparatuses are different, and the setting locations of the acquisition apparatuses are different, there may be a certain difference among the image data, the first point cloud data and the second point cloud data, therefore it is necessary to project pixel points of the image data and the second point cloud data into the same voxel space as the first point cloud data via the camera coordinate projection method, to obtain the camera coordinate projection data, and then a depth network and the model parameters are used to perform target detection and recognition on the camera coordinate projection data to obtain the first environment sensing result. **In** an embodiment, the first environment sensing result further includes information such as a target detection result and a confidence level of the result.

According to one embodiment of the present invention, it is necessary to first summarize the image data, the first point cloud data and the second point cloud data, and then a CLOCs fusion algorithm is used to preprocess the image data, the first point cloud data and the second point cloud data in combination with the model parameters to obtain a more accurate fusion result, that is, the first environment sensing result.

It can be understood that matching the first environment sensing result to obtain the mutual sensing result further includes: matching the first environment sensing result with vehicle information via the data platform to obtain the mutual sensing result, wherein the vehicle information includes at least one piece of orientation information, color information and speed information of the vehicle itself.

It should be noted that in the present invention, the vehicle information may also be acquired from the image data, the first point cloud data and the second point cloud data, and the vehicle information includes data information such as the orientation information of the vehicle itself, the color information of the vehicle itself, model information, vehicle appearance, a device, and an error of the sensing result; when the data platform matches the first environment sensing result, in order to make the matching result be more accurate, the vehicle information should also be taken into consideration, and the first environment sensing result and the vehicle information are matched by the data platform to obtain the mutual sensing result, wherein the first environment sensing result and the vehicle information include data such as the own information the first vehicle, and information, distances and features of vehicles in the vicinity of the first vehicle, so that a more accurate comprehensive sensing result can be conveniently obtained in the present invention.

The own information the first vehicle may directly use data stored in a data end built in the first vehicle, and there is no need to repeatedly collect the own information of the first vehicle, thereby saving network resources.

In an embodiment, in the present invention, the first environment sensing result and the vehicle information are first stored, and then the first environment sensing result and the vehicle information are sent to the Internet of Vehicles, and any data transmission form may be used during this process.

According to one embodiment of the present invention, in response to centralized deployment being used, the first environment sensing result and the vehicle information may be sent to the cloud platform or a certain data processing server; and in response to distributed deployment being used, the first environment sensing result and the vehicle information may be directly transmitted by mechanisms such as broadcast or multicast.

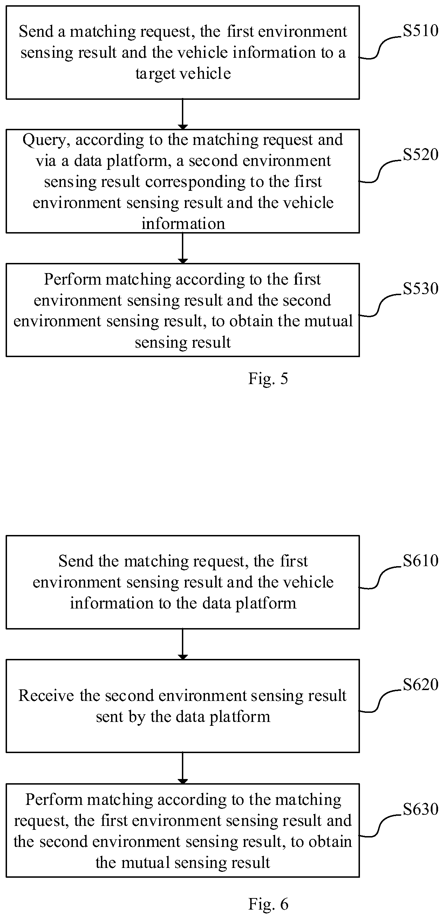

Referring to Fig. 5, in the first aspect, an embodiment of the present invention provides a method for matching the first environment sensing result with the vehicle information to obtain the mutual sensing result, including, but not limited to, S510, S520 and S530.

At S510, sending a matching request, the first environment sensing result and the vehicle information to the target vehicle.

At S520, querying, according to the matching request and via the data platform, a second environment sensing result corresponding to the first environment sensing result and the vehicle information, wherein the second environment sensing result is generated by the target vehicle according to the external environmental information.

At S530, performing matching according to the first environment sensing result and the second environment sensing result, to obtain the mutual sensing result.

It should be noted that, since the first vehicle only has the first environment sensing result of the first vehicle itself on the target vehicle at this time, in order to obtain the mutual sensing result, it is necessary to combine the second environment sensing result of the first vehicle by the target vehicle, therefor it is necessary to send the matching request to the data platform, and the data platform receives the matching request, and matches the first environment sensing result and the second environment sensing result.

It should be noted that there are two matching manners in the present invention, one is a matching manner of the first vehicle in a low-latency network environment, and the other is a matching manner of the first vehicle in a high-latency network environment, and the matching manner of the first vehicle in the low-latency network environment is described below.

In an embodiment, in a case where the current network environment is in low latency, after obtaining the first environment sensing result and the vehicle information, the first vehicle directly sends the matching request, the first environment sensing result and the vehicle information to the target vehicle, and when the first vehicle sends the first environment sensing result and the vehicle information, the data platform has stored the first environment sensing result and the vehicle information, since the data platform may store the environment sensing results and the vehicle information of a plurality of vehicles in a fixed region in real time, the second environment sensing result corresponding to the first environment sensing result and the vehicle information may be obtained by querying the data platform and comparing various types of feature information, speed information, road condition information and the like, and the second environment sensing result is generated by the target vehicle according to the external environmental information.

In an embodiment, after the second environment sensing result is obtained, it is also necessary to perform matching according to the first environment sensing result and the second environment sensing result to obtain the mutual sensing result, the mutual sensing result reflects a decision error of the first vehicle in the driving process, and the mutual sensing result is obtained to facilitate subsequent correction or auxiliary prediction of the first environment sensing result or state value of the first vehicle.

Referring to Fig. 6, in the first aspect, an embodiment of the present invention provides another method for matching the first environment sensing result with the vehicle information to obtain the mutual sensing result, including, but not limited to, S610, S620 and S630.

At S610, sending the matching request, the first environment sensing result and the vehicle information to the data platform.

At S620, receiving the second environment sensing result sent by the data platform.

At S630, performing matching according to the matching request, the first environment sensing result and the second environment sensing result, to obtain the mutual sensing result.

It should be noted that the matching manner of the first vehicle in the high-latency network environment is described next.

In an embodiment, in a case where the network environment is in high latency, after obtaining the first environment sensing result and the vehicle information, the first vehicle sends the matching request to the data platform, the data platform stores the first environment sensing result and the vehicle information of the first vehicle while receiving the matching request, and the data platform obtains the second environment sensing result matching therewith according to the first environment sensing result and the vehicle information, and sends the second environment sensing result to the first vehicle, so that the first vehicle can immediately receive the second environment sensing result, and perform matching according to the first environment sensing result and the second environment sensing result to obtain the mutual sensing result.

In an embodiment, the mutual sensing result may reflect a relative location of the first vehicle, which is sensed in the perspective of the target vehicle, after the mutual sensing result is obtained, it is still necessary to perform conversion on the relative location of the first vehicle, in response to a bird's-eye view coordinate of the first environment sensing result of the location of the target vehicle in a first vehicle reference system by the first vehicle is $[x_B, y_B]$, and is set to be $\hat{l}_{A\text{-}B}$, the coordinate of the first vehicle in a target vehicle coordinate system may be obtained by $\hat{l}_{A\text{-}B}$ and coordinate conversion as

$$\hat{l}'_{B-A} = H \cdot \hat{l}_{A-B}$$ , wherein $H$ is equivalent to a conversion matrix for converting the relative location, and the calculation formula of H is:

$$H = \begin{bmatrix} -\cos\alpha & -\sin\alpha \\ \sin\alpha & -\cos\alpha \end{bmatrix}$$

Wherein $\alpha$ is a headstock angle difference, that is, an included angle of the target vehicle coordinate system, which may be calculated by using vehicle orientation information uploaded by the first vehicle and the target vehicle. After converted coordinates are obtained, it is still necessary to perform filtering according to the converted coordinates, to obtain the comprehensive sensing result.

It can be understood that filtering the mutual sensing result to obtain the comprehensive sensing result includes: calculating the mutual sensing result to obtain a covariance matrix, and calculating Kalman filtering of a gain according to the covariance matrix, to obtain the comprehensive sensing result; or, calculating the mutual sensing result via an evaluation function to obtain particle filtering of a weight of the mutual sensing result, and obtaining the comprehensive sensing result according to the particle filtering; or, calculating the mutual sensing result via a deep learning network to obtain a weighted sum of confidence levels, and obtaining the comprehensive sensing result according to the weighted sum of the confidence levels.

It should be noted that after the mutual sensing result is obtained, it is necessary to filter the mutual sensing result to remove interference factors therefrom to obtain a more accurate result, thereby facilitating subsequent correction or auxiliary prediction.

According to one embodiment of the present invention, when the Kalman filtering of the gain is calculated according to the covariance matrix, it is firstly set that the bird's-eye view coordinate of the first environment sensing result of the location of the target vehicle in the first vehicle reference system by the first vehicle is $[x_B, y_B]$, and that an error covariance matrix of the bird's-eye view coordinate is $P_{A\text{-}B}$. On the contrary, the bird's-eye view coordinate of the second environment sensing result of the first vehicle in the target vehicle reference system by the target vehicle is $\hat{l}_{B\text{-}A}$, and the error covariance matrix of the bird's-eye view coordinate is set to be $P_{B\text{-}A}$. The variance of the result H after coordinate conversion is:

$$P'_{B-A} = HP_{A-B}H^T$$

Wherein $H$ is equivalent to a conversion matrix for converting the relative location, and $H^T$ is equivalent to a transpose matrix of the conversion matrix.

Then, the location information $\hat{l}''_{B-A}$ of bidirectional sensing of the first vehicle by the target vehicle is:

$$K = P'_{B-A}(P'_{B-A} + P_{B-A})^{-1}$$

$$\hat{l}''_{B-A} = (I - K)\hat{l}'_{B-A} + K\hat{l}_{B-A}$$

Wherein $I$ is a unit matrix, and $K$ is equivalent to a Kalman gain.

It can be learned from the above calculation that the variance of $\hat{l}''_{B-A}$ is:

$$P'_B = (I - K)P'_B(I - K)^T + KP_BK^T$$
$$= P'_B - P'_BK^T - KP'_B + KP'_BK^T + KP_BK^T$$
$$= P'_B - P'_BK^T - KP'_B + K(P'_B + P_B)K^T$$
$$= P'_B - P'_BK^T - KP'_B + P'_BK^T$$
$$= (I - K)P'_B$$
$$= P_B(P_B + P'_B)^{-1}P'_B$$

Wherein $P_B$ is a variance of location information of the first environment sensing result of a second vehicle by the first vehicle, and $P'_B$ is a variance of location information of the mutual sensing result of the second vehicle by the first vehicle.

It should be noted that a z coordinate of the first environment sensing result or a z coordinate of the second environment sensing result may be directly obtained by the vehicle size of the first vehicle or the second vehicle itself.

It should be noted that Kalman filtering is an algorithm that utilizes a linear system state equation to perform optimal estimation on a system state via system input and output observation data. The covariance matrix is a covariance between respective vector elements for each element.

According to another embodiment of the present invention, in the location information of the first environment sensing result of the first vehicle, the z coordinate thereof is obtained by the vehicle size of the first vehicle, and in the present embodiment, an x coordinate and a y coordinate thereof are calculated by using the following method:

In response to the bird's-eye view coordinate of the first environment sensing result of the location of the target vehicle in the first vehicle reference system by the first vehicle is $[x_B, y_B]^T$, and is set to be $\hat{l}_{A-B}$, an average error covariance matrix detected by the same is $P_A$. Otherwise, the bird's-eye view coordinate of the second environment sensing result of the first vehicle in the target vehicle reference system by the target vehicle is $\hat{l}_{B-A}$, and an average error covariance matrix detected by the same is $P_B$. In the present embodiment:

$$\hat{l}_{A-B} = \begin{pmatrix} -1.1 \\ -2.2 \end{pmatrix}; \quad \hat{l}_{B-A} = \begin{pmatrix} 1.3 \\ 1.9 \end{pmatrix}; \quad P_A = \begin{pmatrix} 2 & 3 \\ 3 & 2 \end{pmatrix}; \quad P_B = \begin{pmatrix} 3 & 3 \\ 3 & 3 \end{pmatrix}$$

Here, $a$ is set to be 0, and then the calculation formula of $H$ is:

$$H = \begin{bmatrix} -1 & 0 \\ 0 & -1 \end{bmatrix}$$

The coordinate thereof in the target vehicle coordinate system may be obtained by $\hat{l}_{A-B}$ and coordinate conversion as:

$$\hat{l}'_{B-A} = H \cdot \hat{l}_{A-B} = \begin{pmatrix} 1.1 \\ 2.2 \end{pmatrix}$$

Then, it may be obtained that:

$$P'_B = HP_AH^T = \begin{pmatrix} 2 & 3 \\ 3 & 2 \end{pmatrix}$$

Wherein $P_B$ is the variance of the location information of the first environment sensing result of the second vehicle by the first vehicle, and $P'_B$ is the variance of the location information of the mutual sensing result of the second vehicle by the first vehicle.

Then, the location information included in the mutual sensing result of bidirectional sensing of the first vehicle by the target vehicle is:

$$K = P'_B(P'_B + P_B)^{-1} = \begin{pmatrix} \frac{8}{11} & \frac{-3}{11} \\ \frac{-3}{11} & \frac{8}{11} \end{pmatrix}; \quad \hat{l}''_{B-A} = (I-K)\hat{l}'_{B-A} + K\hat{l}_{B-A} = \begin{pmatrix} 1.32 \\ 1.93 \end{pmatrix}$$

Wherein $I$ is a unit matrix, and $K$ is equivalent to a Kalman gain.

Thus, it can be seen that the variance of $\hat{l}''_{B-A}$ is:

$$P'_B = P_B P'_B (P_B + P'_B)^{-1}$$

$$= \begin{pmatrix} 3 & 3 \\ 3 & 3 \end{pmatrix} \cdot \begin{pmatrix} 2 & 3 \\ 3 & 2 \end{pmatrix} \cdot \begin{pmatrix} 5 & 6 \\ 6 & 5 \end{pmatrix}^{-1}$$

$$= \begin{pmatrix} 15 & 15 \\ 15 & 15 \end{pmatrix} \cdot \begin{pmatrix} \frac{-5}{11} & \frac{6}{11} \\ \frac{6}{11} & \frac{-5}{11} \end{pmatrix}$$

$$= \begin{pmatrix} \frac{15}{11} & \frac{15}{11} \\ \frac{15}{11} & \frac{15}{11} \end{pmatrix}$$

It should be noted that in the present embodiment, $P_B$ is the mutual sensing result, $P'_B$ is the comprehensive sensing result obtained after filtering, wherein a local diagonal element of the covariance matrix represents an error of a random variable, thus it can be obtained that after filtering, the error of $P'_B$ is less than that of $P_B$. Further, it can be learned that after the mutual sensing result is filtered, the error of the obtained comprehensive sensing result is less than that of the mutual sensing result, thereby facilitating subsequent correction on the environment sensing result or the state value of the first vehicle or the target vehicle, to obtain a more accurate first environment sensing result or second environment sensing result.

In an embodiment, according to the probability theory, after normalized weights of two random variables are averaged, the variance thereof is less than that of any random variable, therefore it can be deduced that the accuracy of obtaining $\hat{l}''_{B-A}$ is higher, and for the covariance matrix $P$, an average error detected by the first vehicle and the target vehicle, or a cumulative error obtained by iteration, or an error predicted by the deep learning network may be used, but is not limited to.

It can be understood that the present invention further includes: performing auxiliary prediction on the state value of the first vehicle according to the comprehensive sensing result, to obtain a predicted output value, wherein the state value is a driving state parameter of the first vehicle.

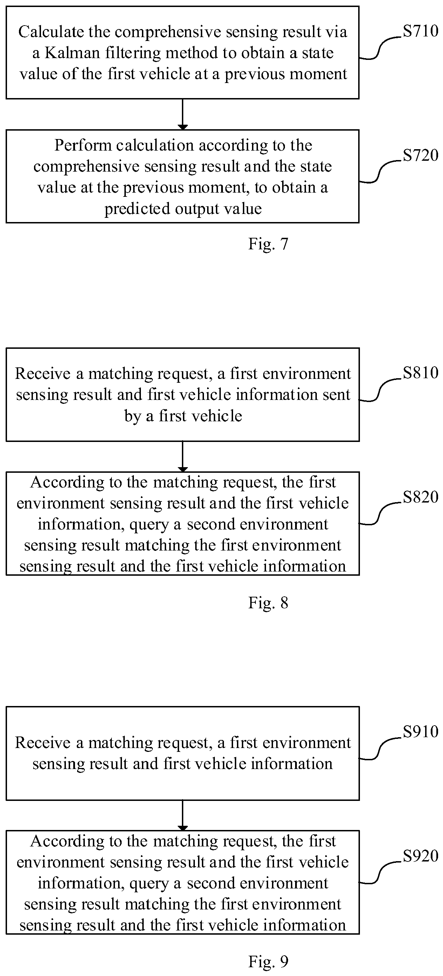

Referring to Fig. 7, in the first aspect, an embodiment of the present invention provides a method for performing auxiliary prediction on the state value of the first vehicle according to the comprehensive sensing result, to obtain the predicted output value, including, but not limited to, S710 and S720.

At S710, calculating the comprehensive sensing result via a Kalman filtering method to obtain the state value of the first vehicle at a previous moment.

At S720, performing calculation according to the comprehensive sensing result and the state value at the previous moment, to obtain the predicted output value.

According to one embodiment of the present invention, after the mutual sensing result sent by the data platform or the target vehicle is received, it is necessary to perform calculation such as location conversion and then perform filtering according to the mutual sensing result that has been subjected to location conversion and the first environment sensing result, to obtain the comprehensive sensing result. In the present embodiment, due to the latency limitation of the network environment, the obtained comprehensive sensing result is not directly used to correct the first environment sensing result of the first vehicle, but is used to perform auxiliary prediction on the state value of the current first vehicle to obtain the predicted output value. In the present embodiment, the Kalman filtering algorithm is used to perform auxiliary prediction in a prediction stage, and the calculation process is:

first, updating a state value $x_{k-1}$ of the first vehicle at the previous moment, wherein the state value at the previous moment is calculated from a state value $x_{k-2}$ at a moment preceding the previous moment and the comprehensive sensing result $\hat{l}''_{k-1}$ at the previous moment via the Kalman filtering algorithm:

$$x_{k\text{-}1} = (I - K_{k\text{-}2})Ax_{k\text{-}2} + K_{k\text{-}2}\hat{l}''_{k\text{-}1}$$

Wherein $A$ is a predicted state transition matrix; and $K$ is a Kalman gain, which is calculated from an cumulative variance and an input variance. The comprehensive sensing result $\hat{l}''_{k-1}$ is obtained by performing normalization weighting on a converted sensing result $\hat{l}'_{B-A}$ of the first first environment sensing result, a converted sensing result $\hat{l}_{B-A}$ of the second environment sensing result, and a sensing confidence level output from the network.

The predicted output value of the first vehicle at the current moment is obtained by the updated state value $x_{k-1}$ at the previous moment and a target detection result $\hat{l}_k$ of a single vehicle at the current moment.

$$\hat{x}_k = (I - K_{k\text{-}1})Ax_{k\text{-}1} + K_{k\text{-}1}\hat{l}_k$$

According to one embodiment of the present invention, when the network environment is a low-latency environment, after the mutual sensing result is filtered to obtain the comprehensive sensing result, the present invention corrects the state value or the environment sensing result of the first vehicle according to the comprehensive sensing result, to reduce the error of the subsequently obtained first environment sensing result.

According to another embodiment of the present invention, when the network environment is a high-latency environment, after the mutual sensing result is filtered to obtain the comprehensive sensing result, due to the factor of the network latency, the present invention cannot directly correct the state value or the environment sensing result of the first vehicle according to the comprehensive sensing result, but performs auxiliary prediction or cumulative variance correction on a subsequent prediction process according to the comprehensive sensing result, to reduce the error of the subsequently obtained first environment sensing result.

Referring to Fig. 8, in a second aspect, an embodiment of the present invention provides an automatic-driving perception method, performed by a data platform, and including, but not limited to, S810 and S820.

At S810, receiving a matching request, a first environment sensing result and first vehicle information, which are sent by a first vehicle.

At S820, according to the matching request, the first environment sensing result and the first vehicle information, querying a second environment sensing result matching the first environment sensing result and the first vehicle information, wherein the first environment sensing result is generated by the first vehicle according to external environmental information, the first vehicle information is vehicle information of the first vehicle, and the second environment sensing result is generated by a target vehicle according to the external environmental information.

It should be noted that in the embodiment of the present invention, the data platform is the Internet of Vehicles, and all vehicles generate environment sensing results in real time during driving according to environmental information, store the environment sensing results and send the environment sensing results to the Internet of Vehicles.

According to one embodiment of the present invention, when the network environment of the first vehicle is a high-latency environment, the Internet of Vehicles firstly receives the second environment sensing result generated by the target vehicle in real time according to the environmental information, and second vehicle information of the target vehicle; after receiving, in a latency manner, the matching request, the first environment sensing result and the first vehicle information, which are sent by the first vehicle, the Internet of Vehicles will store the first environment sensing result and the first vehicle information of the first vehicle, and query stored environment sensing results of all vehicles according to the matching request, the first environment sensing result and the first vehicle information, the queried second environment sensing result of the target vehicle matches the first environment sensing result and the first vehicle information of the first vehicle, and at this time, the Internet of Vehicles sends the second environment sensing result to the first vehicle, so that the first vehicle matches the first environment sensing result via the Internet of Vehicles to obtain a mutual sensing result.

Referring to Fig. 9, in the second aspect, an embodiment of the present invention provides another automatic-driving perception method, including, but not limited to, S910 and S920.

At S910, receiving a matching request, a first environment sensing result and first vehicle information.

At S920, according to the matching request, the first environment sensing result and the first vehicle information, querying a second environment sensing result matching the first environment sensing result and the first vehicle information.

According to another embodiment of the present invention, when the network environment of the first vehicle is a low-latency environment, the first vehicle directly sends the matching request, the first environment sensing result of the first vehicle itself and the first vehicle information to the target vehicle, meanwhile, the Internet of Vehicles also receives the matching request and stores the first environment sensing result and the first vehicle information, the Internet of Vehicles queries the first environment sensing result and the first vehicle information after receiving the same to obtain the second environment sensing result matching therewith, and sends the second environment sensing result to the first vehicle, so that the first vehicle can perform matching according to the first environment sensing result and the second environment sensing result, to obtain a mutual sensing result.

**It** can be understood that, in a third aspect, an embodiment of the present invention provides an automatic-driving perception system, including: a fusion sensing module, configured to acquire external environmental information in real time, and generate at least one first environment sensing result according to the environmental information, wherein the environmental information is a road condition where a first vehicle is located;

a data matching module, in communication connection with a data platform, and configured to match the first environment sensing result via the data platform to obtain a mutual sensing result, wherein the mutual sensing result is obtained by the first vehicle sensing a target vehicle; and

a bidirectional filtering module, in communication connection with the data matching module, and configured to filter the mutual sensing result to obtain a comprehensive sensing result, and correct the first environment sensing result according to the comprehensive sensing result.

It should be noted that the automatic-driving perception system of the present invention further includes a sensing model pruning module, in communication connection with the fusion sensing module, and configured to perform pruning compression on a sensing model, and send model parameters of the compressed sensing model to the fusion sensing module; and the data platform of the automatic-driving perception system of the present invention includes, but is not limited to, the Internet of Vehicles, a storage module of the vehicle itself and a cloud platform. When data matching in the present invention is centralized deployment, the data platform may be the cloud platform or other data platforms, wherein the cloud platform may be configured to store vehicle information and environment sensing results sent by different vehicles, perform query according to the vehicle information and the environment sensing results to obtain other environment sensing results matching therewith, and send the queried environment sensing results to the data matching module, so that the data matching module matches the environment sensing results to obtain the mutual sensing result; and when the data matching in the present invention is distributed deployment, the data platform is the Internet of Vehicles and the storage module of the vehicle itself, the distributed deployment may directly store sensing data on the storage module of the vehicle itself, and perform matching when data requests are sent between vehicles via the Internet of Vehicles.

It should be noted that the sensing model pruning module only uploads model parameters once during the initial running of the system, so that the fusion sensing module performs recognition and reasoning according to the model parameters sent by the sensing model pruning module, which is equivalent to a preprocessing process.

In an embodiment, the fusion sensing module in the present invention includes a visual sensing unit, a laser point cloud sensing unit, a millimeter wave radar sensing unit and a fusion-after-sensing unit, wherein the visual sensing unit, the laser point cloud sensing unit and the radar sensing unit are respectively connected with the fusion-after-sensing unit; the visual sensing unit is configured to acquire external image data and send the image data to the fusion-after-sensing unit; the laser point cloud sensing unit is configured to acquire first point cloud data of an external environment and send the first point cloud data to the fusion-after-sensing unit; and the radar sensing unit is configured to acquire second point cloud data of the external environment and send the second point cloud data to the fusion-after-sensing unit.

It should be noted that, in the case of different network environments, matching manners and correction manners in the present invention are different.

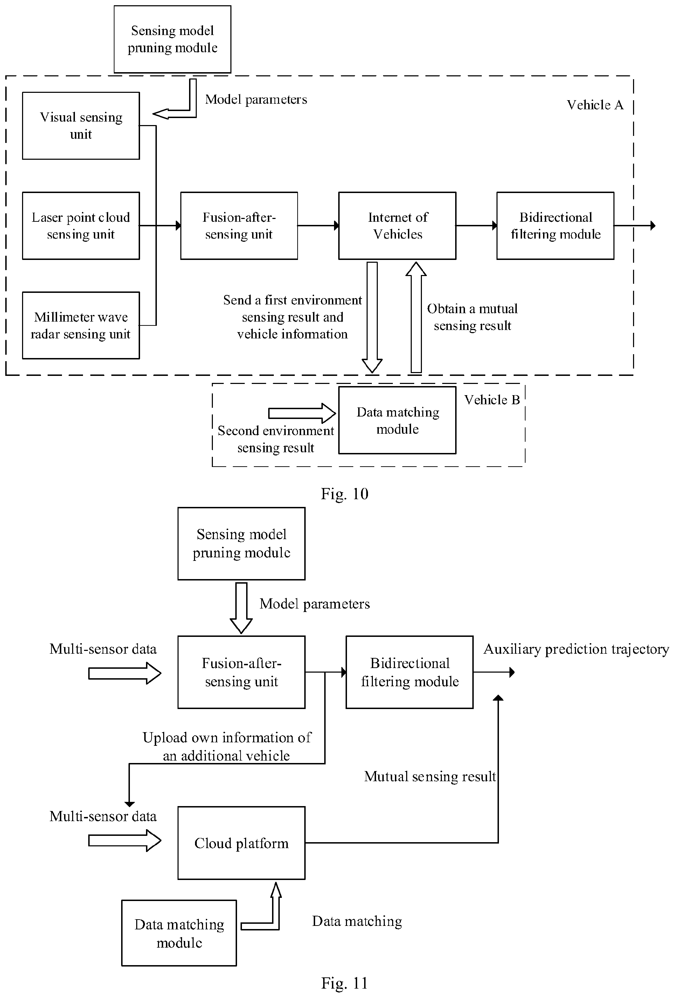

Referring to Fig. 10, Fig. 10 is a schematic diagram of modules of an automatic-driving perception system provided in one embodiment of the present invention. According to one embodiment of the present invention, in the case of low latency, the visual sensing unit, the laser point cloud sensing unit and the radar sensing unit acquire external environmental information in real time, generate a one-dimensional vector having a format of [target location, target size, target orientation, target speed], and send the one-dimensional vector to the fusion-after-sensing unit, so that the fusion-after-sensing unit summarizes the sensing results of the visual sensing unit, the laser point cloud sensing unit and the radar sensing unit to obtain a more accurate fusion result, that is, the first environment sensing result. An CLOCs post-fusion algorithm is used in the present embodiment. After acquiring the first environment sensing result, the fusion-after-sensing unit directly stores the first environment sensing result in the storage module of the vehicle itself together with the own orientation and color speed of the first vehicle and an estimated sensing result covariance, and meanwhile sends a data request to the target vehicle together with the orientation of the first vehicle relative to the target vehicle via the Internet of Vehicles, so that the target vehicle performs query via the Internet of Vehicles to obtain the second environment sensing result corresponding to these data information, and sends the second environment sensing result and sensing data required for requesting a vehicle to the data matching module of the first vehicle; and the data matching module performs matching and location conversion on the first environment sensing result and the second environment sensing result to obtain the mutual sensing result, and the data matching module sends the mutual sensing result to the bidirectional filtering module, so that the bidirectional filtering module performs filtering according to the mutual sensing result and the first environment sensing result, so as to improve the accuracy of the mutual sensing result to obtain the comprehensive sensing result. In an embodiment, in the case of low latency, the automatic-driving perception system of the present invention directly corrects an environment sensing result or a state value of the first vehicle according to the comprehensive sensing result, so as to obtain a more accurate first environment sensing result subsequently.

Referring to Fig. 11, Fig. 11 is a schematic diagram of modules of an automatic-driving perception system provided in another embodiment of the present invention. According to another embodiment of the present invention, in the case of high latency, the visual sensing unit, the laser point cloud sensing unit and the radar sensing unit acquire external environmental information in real time, project pixel points in image data and the second point cloud data into the same voxel space as the first point cloud data via camera coordinates, perform target detection and recognition thereon by using a depth network and model parameters, and generate the first environment sensing result according to the image data, the first point cloud data and the second point cloud data, wherein the first environment sensing result includes information such as a confidence level. After obtaining the first environment sensing result, the fusion-after-sensing unit sends the first environment sensing result and the first vehicle information to the cloud platform via a 5G network together with information such as the orientation and color speed of the vehicle itself, so that the cloud platform stores the information. In an embodiment, in the present embodiment, base station positioning is used to perform matching with the first environment sensing result uploaded by the first vehicle, for example, the first vehicle uploads a sensed location via the cloud platform, meanwhile a base station obtains via positioning that the target vehicle is located at a target location, in this way, the first vehicle completes matching with the target vehicle, then the first environment sensing result of the first vehicle and the second environment sensing result of the second vehicle may be matched by the data matching module to obtain the mutual sensing result, and the mutual sensing result is sent to the target vehicle; and meanwhile, the data matching module sends the mutual sensing result to the bidirectional filtering module, so that the bidirectional filtering module filters the mutual sensing results to improve the accuracy of the mutual sensing result, to obtain the comprehensive sensing result. In an embodiment, in the case of high latency, due to latency limitation, the automatic-driving perception system of the present invention cannot directly correct the environment sensing result or the state value of the first vehicle according to the comprehensive sensing result, but performs auxiliary prediction and cumulative variance correction on a subsequent tracking prediction algorithm according to the comprehensive sensing result.

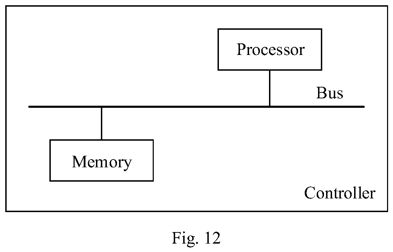

In a fourth aspect, referring to Fig. 12, an embodiment of the present invention provides a controller, including:

at least one memory;

at least one processor; and

at least one program, wherein

the program is stored in the memory, and the processor executes the at least one program to implement:
the automatic-driving perception method according to any of the embodiments in the first aspect of the present invention.

The processor and the memory may be connected by using a bus or in another manner.

The memory, as a non-transient readable storage medium, may be configured to store non-transient software instructions and non-transient instructions. **In** addition, the memory may include a high-speed random access memory, and may further include a non-transient memory, for example, at least one magnetic disk memory device, a flash memory device, or other non-transient solid-state storage devices. **It** can be understood that the memory optionally includes memories remotely disposed relative to the processor, and these remote memories may be connected to the processor by a network. Instances of the above network include, but are not limited to, the Internet, an intranet, a local area network, a mobile communication network, and combinations thereof.

The processor runs the non-transient software instructions, instructions and signals stored in the memory, to implement various functional applications and data processing, that is, implement the automatic-driving perception method in the above embodiments of the first aspect.

The non-transient software instructions and instructions required for implementing the automatic-driving perception method in the above embodiments are stored in the memory, and execute the automatic-driving perception method in the embodiments of the first aspect of the present invention when executed by the processor, for example, execute the S110 to S130 of the method in Fig. 1, the S210 to S220 of the method in Fig. 2, the S310 to S330 of the method in Fig. 3, the S410 to S420 of the method in Fig. 4, the S510 to S530 of the method in Fig. 5, the S610 to S630 of the method in Fig. 6, and the S710 to S720 of the method in Fig. 7 as described above.

In a fifth aspect, an embodiment of the present invention provides a computer-readable storage medium, wherein the computer-readable storage medium stores a computer-executable signal, and the computer-executable signal is used for executing:

the automatic-driving perception method in any of the embodiments of the first aspect of the present invention, or the automatic-driving perception method in any of the embodiments of the second aspect of the present invention.

For example, the S110 to S130 of the method in Fig. 1, the S210 to S220 of the method in Fig. 2, the S310 to S330 of the method in Fig. 3, the S410 to S420 of the method in Fig. 4, the S510 to S530 of the method in Fig. 5, the S610 to S630 of the method in Fig. 6, the S710 to S720 of the method in Fig. 7, the S810 to S820 of the method in Fig. 8, and S910 to S920 of the method in Fig. 9 as described above are executed.

The embodiment of the present invention includes: acquiring external environmental information in real time, and generating a first environment sensing result according to the environmental information; matching the first environment sensing result via a data platform to obtain a mutual sensing result; and filtering the mutual sensing result to obtain a comprehensive sensing result. Based on this, compared with an existing automatic-driving perception system, the present invention may acquire the external environmental information in real time and generate the first environment sensing result according to the environmental information, and use the interaction advantages of the Internet of Vehicles technology to further improve the detection performance and to improve the accuracy and reliability of vehicle detection at the same time.

The apparatus embodiments described above are merely illustrative, wherein units described as separate components may be separated physically or not, components displayed as units may be physical units or not, namely, may be located in one place, or may be distributed on a plurality of units. A part of or all of the units may be selected to implement the purposes of the solutions in the present embodiment according to actual demands.

Through the description of the above implementations, those ordinary skilled in the art may understand that, in all or some of steps in the methods described above may be implemented as software, firmware, hardware and appropriate combinations thereof. Some or all physical components may be implemented as software, which is executed by a processor, such as a central processing unit, a digital signal processor or a microprocessor, or implemented as hardware, or implemented as an integrated circuit, such as an application-specific integrated circuit. Such software may be distributed on a readable medium, the readable medium may include a computer storage medium (or a non-transient medium) and a communication medium (or a transient medium). As is well known to those ordinary skilled in the art, the term computer storage medium includes volatile and nonvolatile, and removable and non-removable media, which are implemented in any method or technology for storing information (such as computer-readable signals, data structures, instruction modules or other data). The computer storage medium includes, but is not limited to, an RAM, an ROM, an EEPROM, a flash memory or other memory technologies, a CD-ROM, a digital versatile disk (DVD) or other optical disk memories, a magnetic cassette, a magnetic tape, a magnetic disk storage or other magnetic storage apparatuses, or any other media, which may be used for storing desired information and may be accessed by a computer. In addition, it is well known to those ordinary skilled in the art that, the communication medium typically includes computer-readable signals, data structures, instruction modules or other data in modulated data signals such as carrier waves or other transport mechanisms, and may include any information transmission media.

The embodiments of the present invention are described in detail above in combination with the drawings, but the present invention is not limited to the above embodiments, and various changes may also be made within the range of knowledge of those ordinary skilled in the art to which the present invention belongs without departing from the spirit of the present invention.

**Claims**

1. An automatic-driving perception method, performed by a first vehicle, and comprising:

   acquiring external environmental information, and generating at least one first environment sensing result according to the environmental information, wherein the environmental information is a road condition where the first vehicle is located;
   matching the first environment sensing result to obtain a mutual sensing result, wherein the mutual sensing result is obtained by mutual sensing of the first vehicle and a target vehicle;
   filtering the mutual sensing result to obtain a comprehensive sensing result; and
   correcting the first environment sensing result according to the comprehensive sensing result.

2. The automatic-driving perception method according to claim 1, further comprising:

   training several first environment sensing results to obtain a sensing model; and
   performing pruning compression on the sensing model to obtain a compressed sensing model and model parameters of the compressed sensing model.

3. The automatic-driving perception method according to claim 2, wherein performing pruning compression on the sensing model to obtain the compressed sensing model and the model parameters of the compressed sensing model comprises:

selecting a compression rate, and compressing the sensing model according to the compression rate, to obtain a first sensing model;
performing structured pruning and adjustment on the first sensing model to obtain a second sensing model; and
judging the second sensing model to obtain a judgment result, and updating the second sensing model according to the judgment result, to obtain the compressed sensing model and the model parameters.

4. The automatic-driving perception method according to claim 3, wherein judging the second sensing model to obtain the judgment result, and updating the second sensing model according to the judgment result, to obtain the compressed sensing model and the model parameters comprises:

in response to the accuracy of the second sensing model being greater than or equal to a preset accuracy threshold value, the second sensing model is the compressed sensing model, and the model parameters are obtained by the compressed sensing model; and
in response to the accuracy of the second sensing model being less than the accuracy threshold value, updating the second sensing model until the accuracy of the second sensing model is greater than or equal to the preset accuracy threshold value.

5. The automatic-driving perception method according to claim 2, wherein the environmental information comprises at least one of image data, first point cloud data and second point cloud data, the image data is captured by a camera, the first point cloud data is detected by a laser radar, and the second point cloud data is detected by a millimeter wave radar.

6. The automatic-driving perception method according to claim 5, wherein generating the at least one first environment sensing result according to the environmental information comprises:
performing target detection and recognition on the environmental information according to the model parameters, to obtain the first environment sensing result.

7. The automatic-driving perception method according to claim 6, wherein performing the target detection and recognition on the environmental information according to the model parameters, to obtain the first environment sensing result comprises:

projecting the image data and the second point cloud data into the same voxel space as the first point cloud data via a camera coordinate projection method, to obtain camera coordinate projection data; and
performing target detection and recognition on the camera coordinate projection data according to the model parameters, to obtain the first environment sensing result.

8. The automatic-driving perception method according to claim 1, wherein matching the first environment sensing result to obtain the mutual sensing result further comprises:
matching the first environment sensing result with vehicle information via a data platform to obtain the mutual sensing result, wherein the vehicle information comprises at least one piece of orientation information, color information and speed information of the vehicle itself.

9. The automatic-driving perception method according to claim 8, wherein matching the first environment sensing result with the vehicle information via the data platform to obtain the mutual sensing result comprises:

sending a matching request, the first environment sensing result and the vehicle information to a target vehicle;
querying a second environment sensing result corresponding to the first environment sensing result and the vehicle information, according to the matching request and via the data platform, wherein the second environment sensing result is generated by the target vehicle according to the external environmental information; and
performing matching according to the first environment sensing result and the second environment sensing result, to obtain the mutual sensing result.

10. The automatic-driving perception method according to claim 8, wherein matching the first environment sensing result with vehicle information via the data platform to obtain the mutual sensing result further comprises:

sending the matching request, the first environment sensing result and the vehicle information to the data platform;

receiving the second environment sensing result sent by the data platform; and

performing matching according to the matching request, the first environment sensing result and the second environment sensing result, to obtain the mutual sensing result.

11. The automatic-driving perception method according to claim 1, wherein filtering the mutual sensing result to obtain the comprehensive sensing result comprises:

calculating the mutual sensing result to obtain a covariance matrix, and calculating Kalman filtering of a gain according to the covariance matrix, to obtain the comprehensive sensing result;

or, calculating the mutual sensing result via an evaluation function to obtain particle filtering of a weight of the mutual sensing result, and obtaining the comprehensive sensing result according to the particle filtering;

or, calculating the mutual sensing result via a deep learning network to obtain a weighted sum of confidence levels, and obtaining the comprehensive sensing result according to the weighted sum of the confidence levels.

12. The automatic-driving perception method according to claim 1, further comprising:

performing auxiliary prediction on a state value of the first vehicle according to the comprehensive sensing result, to obtain a predicted output value, wherein the state value is a driving state parameter of the first vehicle.

13. The automatic-driving perception method according to claim 12, wherein performing the auxiliary prediction on the state value of the first vehicle according to the comprehensive sensing result, to obtain the predicted output value comprises:

calculating the comprehensive sensing result via a Kalman filtering method to obtain the state value of the first vehicle at a previous moment; and

performing calculation according to the comprehensive sensing result and the state value at the previous moment, to obtain the predicted output value.

14. An automatic-driving perception method, performed by a data platform, and comprising:

receiving a matching request, a first environment sensing result and first vehicle information, which are sent by a first vehicle; and

querying a second environment sensing result matching the first environment sensing result and the first vehicle information, according to the matching request, the first environment sensing result and the first vehicle information, wherein the first environment sensing result is generated by the first vehicle according to external environmental information, the first vehicle information is vehicle information of the first vehicle, and the second environment sensing result is generated by a target vehicle according to the external environmental information.

15. The automatic-driving perception method according to claim 14, further comprising:

receiving the matching request, the first environment sensing result and the first vehicle information; and

querying the second environment sensing result matching the first environment sensing result and the first vehicle information, according to the matching request, the first environment sensing result and the first vehicle information.

16. An automatic-driving perception system, comprising:

a fusion sensing module, configured to acquire external environmental information in real time, and generate at least one first environment sensing result according to the environmental information, wherein the environmental information is a road condition where a first vehicle is located;

a data matching module, in communication connection with a data platform, and configured to match the first environment sensing result via the data platform to obtain a mutual sensing result, wherein the mutual sensing result is obtained by the first vehicle sensing a target vehicle; and

a bidirectional filtering module, in communication connection with the data matching module, and configured to filter the mutual sensing result to obtain a comprehensive sensing result, and correct the first environment sensing result according to the comprehensive sensing result.

17. A controller, comprising a memory, a processor, and a computer program stored in the memory and capable of running on the processor, wherein the processor is configured to, when executing the computer program, implement the automatic-driving perception method according to any of claims 1-13.

18. A computer-readable storage medium, storing a computer-executable program thereon, wherein the computer-executable program is configured to cause a computer to execute the automatic-driving perception method according to any of claims 1-13, or the automatic-driving perception method according to any of claims 14-15.

Acquire external environmental information in real time, and generate at least one first environment sensing result according to the environmental information ⟍S110

Match the first environment sensing result to obtain a mutual sensing result ⟍S120

Filter the mutual sensing result to obtain a comprehensive sensing result ⟍S130

Correct the first environment sensing result according to the comprehensive sensing result ⟍S140

Fig. 1

Train several first environment sensing results to obtain a sensing model ⟍S210

Perform pruning compression on the sensing model to obtain a compressed sensing model and model parameters of the compressed sensing model ⟍S220

Fig. 2

Select a compression rate, and compress the sensing model according to the compression rate, to obtain a first sensing model — S310

Perform structured pruning and adjustment on the first sensing model to obtain a second sensing model — S320

Judge the second sensing model to obtain a judgment result, and update the second sensing model according to the judgment result, to obtain the compressed sensing model and the model parameters — S330

Fig. 3

Project image data and second point cloud data into the same voxel space as first point cloud data via a camera coordinate projection method, to obtain camera coordinate projection data — S410

Perform target detection and recognition on the camera coordinate projection data according to the model parameters, to obtain the first environment sensing result — S420

Fig. 4

Send a matching request, the first environment sensing result and the vehicle information to a target vehicle ⌒ S510

Query, according to the matching request and via a data platform, a second environment sensing result corresponding to the first environment sensing result and the vehicle information ⌒ S520

Perform matching according to the first environment sensing result and the second environment sensing result, to obtain the mutual sensing result ⌒ S530

Fig. 5

Send the matching request, the first environment sensing result and the vehicle information to the data platform ⌒ S610

Receive the second environment sensing result sent by the data platform ⌒ S620

Perform matching according to the matching request, the first environment sensing result and the second environment sensing result, to obtain the mutual sensing result ⌒ S630

Fig. 6

Calculate the comprehensive sensing result via a Kalman filtering method to obtain a state value of the first vehicle at a previous moment

S710

Perform calculation according to the comprehensive sensing result and the state value at the previous moment, to obtain a predicted output value

S720

Fig. 7

Receive a matching request, a first environment sensing result and first vehicle information sent by a first vehicle

S810

According to the matching request, the first environment sensing result and the first vehicle information, query a second environment sensing result matching the first environment sensing result and the first vehicle information

S820

Fig. 8

Receive a matching request, a first environment sensing result and first vehicle information

S910

According to the matching request, the first environment sensing result and the first vehicle information, query a second environment sensing result matching the first environment sensing result and the first vehicle information

S920

Fig. 9

Sensing model
pruning module

Model parameters

Visual sensing
unit

Laser point cloud
sensing unit

Millimeter wave
radar sensing unit

Fusion-after-
sensing unit

Internet of
Vehicles

Bidirectional
filtering module

Vehicle A

Send a first environment
sensing result and
vehicle information

Obtain a mutual
sensing result

Second environment
sensing result

Data matching
module

Vehicle B

Fig. 10

Sensing model
pruning module

Model parameters

Multi-sensor data

Fusion-after-
sensing unit

Bidirectional
filtering module

Auxiliary prediction trajectory

Upload own information of
an additional vehicle

Mutual sensing result

Multi-sensor data

Cloud platform

Data matching
module

Data matching

Fig. 11

22

Fig. 12

## INTERNATIONAL SEARCH REPORT

| International application No. |
|---|
| **PCT/CN2023/108592** |

**A. CLASSIFICATION OF SUBJECT MATTER**

B60W60/00(2020.01)i; B60W40/02(2006.01)i; G05D1/02(2020.01)i; G06V20/58(2022.01)i; G06V10/80(2022.01)i; G06N3/02(2006.01)i; H04W4/46(2018.01)i; H04L67/12(2022.01)i

According to International Patent Classification (IPC) or to both national classification and IPC

**B. FIELDS SEARCHED**

Minimum documentation searched (classification system followed by classification symbols)

IPC:B60W; G05D; G06V; G06N; H04W; H04L

Documentation searched other than minimum documentation to the extent that such documents are included in the fields searched

Electronic data base consulted during the international search (name of data base and, where practicable, search terms used)

CNTXT; CJFD; ENTXTC; VEN; DWPI: 传感, 感知, 检测, 匹配, 相互, 互相, 交互, 共享, 分享, 交换, 协作, 协同, 综合, 修正, 精度, 准确, 可靠, sensor, detect, perception, match, mutual, share, exchang+, cooperat+, collaborat+, correct+, precision, accurat+, reliable

**C. DOCUMENTS CONSIDERED TO BE RELEVANT**

| Category* | Citation of document, with indication, where appropriate, of the relevant passages | Relevant to claim No. |
|---|---|---|
| X | US 2021354708 A1 (ZENUITY AB) 18 November 2021 (2021-11-18) description, pages 3-8, and figures 1-3 | 1-18 |
| X | US 2021304607 A1 (GM CRUISE HOLDINGS LLC) 30 September 2021 (2021-09-30) description, pages 1-14, and figures 1-12 | 1-18 |
| A | CN 110162032 A (DELPHI TECHNOLOGIES, INC.) 23 August 2019 (2019-08-23) entire document | 1-18 |
| A | CN 219277473 U (HUBEI INSOURE ELECTRONICS CO., LTD.) 30 June 2023 (2023-06-30) entire document | 1-18 |
| A | CN 109426259 A (HONDA MOTOR CO., LTD.) 05 March 2019 (2019-03-05) entire document | 1-18 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 September 2023** | **06 October 2023** |

| Name and mailing address of the ISA/CN | Authorized officer |
|---|---|
| China National Intellectual Property Administration (ISA/CN) China No. 6, Xitucheng Road, Jimenqiao, Haidian District, Beijing 100088 | |
| | Telephone No. |

Form PCT/ISA/210 (second sheet) (July 2022)

## INTERNATIONAL SEARCH REPORT
**Information on patent family members**

International application No.

**PCT/CN2023/108592**

| Patent document cited in search report | | | Publication date (day/month/year) | Patent family member(s) | | | Publication date (day/month/year) |
|---|---|---|---|---|---|---|---|
| US | 2021354708 | A1 | 18 November 2021 | EP | 3910366 | A1 | 17 November 2021 |
| | | | | CN | 113743709 | A | 03 December 2021 |
| US | 2021304607 | A1 | 30 September 2021 | US | 2023077837 | A1 | 16 March 2023 |
| CN | 110162032 | A | 23 August 2019 | EP | 3527940 | A1 | 21 August 2019 |
| | | | | US | 2019250632 | A1 | 15 August 2019 |
| CN | 219277473 | U | 30 June 2023 | None | | | |
| CN | 109426259 | A | 05 March 2019 | US | 2019069052 | A1 | 28 February 2019 |
| | | | | DE | 102018213694 | A1 | 28 February 2019 |

Form PCT/ISA/210 (patent family annex) (July 2022)

## REFERENCES CITED IN THE DESCRIPTION

**Patent documents cited in the description**

- CN 202210948710